# EUROPÄISCHE PATENTSCHRIFT

(11) **EP 1 423 486 B1**
(45) Veröffentlichungstag und Bekanntmachung des Hinweises auf die Patenterteilung: **04.10.2006**
(21) Anmeldenummer: 02774529.8
(22) Anmeldetag: 22.08.2002
(51) Int. Cl.: C09D 201/00, C09D 101/28, C09D 5/20, E04F 13/00

(54) **ZUSAMMENSETZUNG FÜR WIEDERABLÖSBARE DEKORATIVE BESCHICHTUNGEN**
COMPOSITION FOR DETACHABLE DECORATIVE COATINGS
COMPOSITION POUR REVETEMENTS DECORATIFS AMOVIBLES

(30) Priorität: 30.08.2001 DE 10142135
(43) Veröffentlichungstag der Anmeldung: 02.06.2004
(73) Patentinhaber: Henkel Kommanditgesellschaft auf Aktien, 40589 Düsseldorf (DE)
(72) Erfinder: SCHÖTTMER, Bernhard, 40789 Monheim (DE); RIEMENSCHNEIDER, Horst, 59427 Unna (DE); FANDEL, Thomas, 59423 Unna (DE); SATTLER, Hans-Peter, 59174 Kamen (DE)
(86) Internationale Anmeldenummer: PCT/EP2002/009372
(87) Internationale Veröffentlichungsnummer: WO 2003/020838

(56) Entgegenhaltungen:
- WO-A-99/55769
- DE-A- 4 201 800
- DE-A- 19 733 166
- DE-B- 1 224 191
- GB-A- 773 338
- US-A- 3 583 932
- DATABASE WPI Week 200102 Derwent Publications Ltd., London, GB; AN 2001-014007 XP002225222 DUGUEV S V ET AL.: "Method of preparing powdery paint" & RU 2 147 594 A (DOK FIRM CO LTD), 20. April 2000 (2000-04-20)
- DATABASE WPI Week 199025 Derwent Publications Ltd., London, GB; AN 1990-020768 XP002225223 IZMAILOVA P A ET AL.: "Composition for temporary coating" & SU 1 470 753 A (ACCOUNTING BUSINESS MACH), 7. April 1989 (1989-04-07)

## Beschreibung

Die Erfindung betrifft eine Zusammensetzung für eine wiederablösbare dekorative Beschichtung für den Innenbereich, ihre Herstellung sowie ihre Verwendung.

Unter Beschichtungen werden eine oder mehrere, in sich zusammenhängende, aus Beschichtungsstoffen bestehende Schichten auf dem Untergrund verstanden. Unter Beschichtungsstoffen werden flüssige bis pastöse oder pulverförmige Stoffe, bestehend aus Bindemitteln, Füllstoffen, Pigmenten, gegebenenfalls Lösemitteln und Additiven verstanden. Beschichtungen sind beispielsweise mineralische Putze, Kunstharzputze oder Spachtelmassen. Für Beschichtungsstoffe gilt die DIN 55 945.

Im Innenbereich sind Kunstharzputze als dekorative Beschichtung weit verbreitet, da sie sehr dauerhaft sind und dem Anwender eine breite Auswahl an individuellen Gestaltungsmöglichkeiten bieten. Unter Kunstharzputzen werden Beschichtungen mit organischen Bindemitteln verstanden, Als organische Bindemittel werden Kunststoffdispersionen, Redispersionspulver oder Lösungen mit oder ohne Weichmacheranteile eingesetzt, insbesondere Polymere aus Acrylsäureestern, Vinylacetat, VinylacetatlEthylen. Styrol, Butadien, Styrolacrylat. Außerdem enthalten Kunstharzputze mineralische und/oder organische Füllstoffe, Farbstoffe oder Pigmente, gegebenenfalls Lösemittel und Additive wie Entschäumer, Filmbildehilifsmittel, Emulgatoren, Verdicker oder Konservierungsmittel. Für Kunstharzputze gilt die DIN 18 558.

Ein wesentlicher Nachteil von handelsüblichen Kunstharzputzen ist deren schlechte Wiederentfernbarkeit Einmal auf den Untergrund aufgebracht und verfestigt, kann ein Kunstharzputz nur noch unter großem Kraft- und Zeitaufwand und erheblicher Staub- und Schmutzentwicklung von dem Untergrund entfernt werden. Darüberhinaus wird dabei fast immer der Untergrund beschädigt. Dies ist insbesondere in Mietwohnungen, wo Wohnräume überwiegend in weißer Raufaser gestaltet sind und so auch beim Auszug wieder übergeben werden müssen, ein Hindernis für den Einsatz von Kunstharzputzen.

Wiederentfernbare Beschichtungssysteme sind bekannt. Insbesondere zum temporären Schutz von lackierten Substraten, etwa in der Automobilindustrie, ist der Einsatz solcher Systeme üblich.

Die EP 0 336 196 offenbart ein Verfahren zum Aufbringen von Beschichtungen, die lackierte Substrate vor Witterungseinflüssen und Steinschlag schützen und die bei Bedarf mit einem Warmwasserhochdruckreiniger ohne Beschädigung des Untergrundes entfernt werden können. Voraussetzung ist eine völlige Entfernung des auf dem lackierten Substrat haftenden Fetts. Auf das lackierte Substrat werden dann zwei Beschichtungsfilme aufgebracht, vorzugsweise aufgespritzt. Die aufgebrachten Beschichtungen enthalten mindestens ein Cellulosederivat sowie organische Lösemittel in erheblichem Umfang. Die Lösemittel der zweiten Beschichtungsschicht bestehen zu mindestens 80% aus aliphatischen und/oder aromatischen Kohlenwasserstoffen. Die temporäre Beschichtung muss nach dem Aufbringen getrocknet werden. Die Trockenfilmdicke der temporären Beschichtung beträgt vorzugsweise 50 - 70 µm.

In der WO 9922588 wird eine wiederentfernbare Beschichtung zum Schutz vor Sonnenbestrahlung, vorzugsweise für Gewächshäuser, beschrieben. Diese Beschichtung besteht hauptsächlich aus einem Bindemittel und aus Pigmenten. Als Bindemittel wird ein Polymer mit einem Molekulargewicht von 10.000 bis 100.000 und einer Säurezahl von vorzugsweise 60 bis 160 eingesetzt, bevorzugt ein Vinylpolymer. Als Pigmente werden vorwiegend Weißpigmente wie zum Beispiel Magnesium- oder Titanoxid eingesetzt. Außerdem enthält die Beschichtung Haftvermittler, bevorzugt Silane, Verdicker, eine schwache Base als Filmbildehilfsmittel und weitere Hilfsstoffe. Die Beschichtung haftet gut auf Glas- oder Kunststoffuntergründen. Zur Entfernung der Beschichtung offenbart die Schrift eine Zusammensetzung bestehend aus einer starken Base, vorzugsweise Natriumhydroxid, einem Komplexbildner und gegebenenfalls organischen Lösemitteln. Es findet eine Verseifung des Bindemittels in der Beschichtung statt.

Es ist unmittelbar ersichtlich, dass die in den genannten Patentschriften beschriebenen Beschichtungssysteme nicht zur Anwendung als wiederentfernbare dekorative Beschichtung im Innenbereich geeignet sind. Einerseits haben die Beschichtungen nur schützenden, nicht aber dekorativen Charakter. Andererseits ist die Entfernung nur unter Einsatz spezieller Werkzeuge oder chemischer Hilfsmittel möglich.

Aus der DE 197 33 166 ist ein Verfahren zur Herstellung von in Wasser redispergierbaren Polymerpulver-Zusammensetzungen bekannt sowie deren Verwendung als Komponente für die Herstellung von Putzen, Bauklebem und Spachtelmassen. Nachteilig bei denen in dieser Anmeldung beschriebenen Zusammensetzungen ist, dass diese sich lediglich für permanente Wandbeschichtungen eignen, eine wieder entfernbare Wandbeschichtung für den Innenbereich wird nicht erwähnt.

Die DE 4 317 957 offenbart eine dekorative, umweltfreundliche wiederentfernbare Beschichtung für den Innenbereich. Die Trockenmischung besteht aus 61,95 bis 94,95 Gew.-% Cellulosepartikeln, 5 bis 17 Gew.-% Klebstoffen, 0,05 Gew.-% Emulgator, 0 bis 20 Gew.-% Glimmer und/oder Holzpartikel und gegebenenfalls Farbstoffen. Die Beschichtung wird zur Applikation im Verhältnis 1 : 7,5 mit Wasser verdünnt und mit der Sprühpistole aufgetragen. Dabei entsteht eine im Aussehen einer Raufasertapete ähnelnde Beschichtung, die nach Anfeuchten ebenfalls ähnlich wie eine Raufasertapete wieder abgezogen werden kann.

Eine Individuelle Gestaltung ist nur in engen Grenzen möglich. Durch die hohe Menge an Cellulosepartikel und die bevorzugte Applikationstechnik ist es nicht möglich, in nennenswertem Umfang strukturgebende Füllstoffe in die Rezeptur einzubringen. Es sind daher nur einer Raufasertapete ähnelnde Beschichtungsgestaltungen möglich.

Der vorliegenden Erfindung lag daher die Aufgabe zugrunde, eine dekorative Beschichtung für den Innenbereich in einer leicht wiederentfernbaren Form bereitzustellen. Unter leichter Wiederentfernbarkeit ist dabei zu verstehen, dass die Beschichtung jederzeit mit geringem Kraftaufwand, ohne den Einsatz von Spezialwerkzeugen, unter Vermeidung von Staubentwicklung und Verschmutzungen der Umgebung und ohne den Untergrund zu beschädigen vollständig vom Untergrund abgelöst werden kann. Der Untergrund soll danach für eine erneute Beschichtung mit allen gängigen Beschichtungssystemen zur Verfügung stehen. Die wiederentfernbare Beschichtung soll darüberhinaus durch die Verabeitungscharakteristik, die individuellen Gestaltungsmöglichkeiten, das optische Erscheinungsbild und die Dauerhaftigkeit eines handelsüblichen Kunstharzputzes gekennzeichnet sein.

Die erfindungsgemäße Lösung der Aufgabe ist den Patentansprüchen zu entnehmen. Sie besteht im wesentlichen darin, dass der Anteil des Bindemittels in der Zusammensetzung für dekorative Beschichtungen im Vergleich zu konventionellen Beschichtungen deutlich verringert wird und ein Bindemittelsystem auf der Basis von mindestens zwei verschiedenartigen natürlichen und/oder synthetischen Polymeren ist.

In nicht naheliegender Weise wurde gefunden, dass mit gegenüber klassischen Kunstharzputzen wesentlich verringerten Bindemittelmengen stabile, dauerhafte und wiederablösbare Beschichtungen erzeugt werden können. DIN 18 558 verlangt für Kunstharzputze je nach Körnung der Füllstoffe einen Mindestanteil an Polymerisatharzen von 4,5 bis B Gew.-% (Feststoffanteil des Polymerisatharzes bezogen auf den Gesamtfeststoffgehalt des Putzes). Demgegenüber zeichnen sich die erfindungsgemäßen Zusammensetzungen für wiederablösbare Beschichtungen durch einen Bindemittelgehalt von 0,5 bis 3 Gew.-%, vorzugsweise 0,75 bis 2,5 Gew.-% und besonders bevorzugt von 1 bis 2 Gew.-%, berechnet als Feststoff des Bindemittelsystems bezogen auf den Gesamtfeststoffgehalt der erfindungsgemäßen Zusammensetzung, aus.

Das Bindemittelsystem der erfindungsgemäßen Zusammensetzung enthält mindestens ein Bindemittel aus der Gruppe (A) und mindestens ein Bindemittel aus der Gruppe (B). Der Feststoff des Bindemittelsystem enthält 30 bis 90 Gew.-%, vorzugsweise 40 bis 80 Gew.-% und besonders bevorzugt 45 bis 60 Gew.-% Bindemittel aus der Gruppe (A) sowie 10 bis 70 Gew.-%, vorzugsweise 20 bis 60 Gew.-% und besonders bevorzugt 40 bis 55 Gew.-% Bindemittels aus der Gruppe (B).

Gruppe (A) beinhaltet Cellulosederivate, insbesondere Celluloseether, und Stärke und/oder Stärkederivate, insbesondere Stärkeester oder Stärkeether. Besonders geeignet sind Ethylcellulose, Methylcellulose, Propylcellulose, Carboxymethylcellulose, Methylhydroxyethylcellulose und Methylhydroxypropylcellulose. Gruppe (B) beinhaltet Polymerisatharze in Form von Kunststoffdispersionen. Redispersionspulvem oder Lösungen. Besonders geeignet sind Homo- oder Copolymere aus Acrylsäureestern, Vinylacetat, Vinyllaurat, Vinylversatat, Styrol, Butadien, Styrolacrylat oder/und Vinylacetat/ethylen.

Weiterhin enthält die erfindungsgemäße Zusammensetzung für wiederablösbare Beschichtungen 80 bis 99 Gew.-%, vorzugsweise 85 bis 98 Gew.-% und besonders bevorzugt 90 bis 97 Gew.-% Füllstoffe. Als Füllstoffe werden anorganische oder organische, natürliche oder künstliche Füllstoffe eingesetzt. Bevorzugt werden anorganische Füllstoffe eingesetzt. Die Reindichte der verwendeten Füllstoffe beträgt1,2 bis 5 g/cm³, vorzugsweise 1.5 bis 4 g/cm³ und besonders bevorzugt 1,8 bis 3,5 g/cm³. Die Füllstoffe werden nach ihrer Korngröße in Grobsande (1 bis 5 mm), Feinsande (≤ 1mm), Feinstsande (≤ 0,25 mm) und Mehle (≤ 0,125 mm) unterteilt. Es versteht sich, dass zum Aufbau eines ausreichend dichten Füllstoffgefüges und zur Erzielung guter Verarbeitungseigenschaften immer Füllstoffe verschiedener Korngrößenklassen gemischt werden müssen.

Die erzielbaren Strukturierungseffekte hängen in hohem Maße von der Korngröße der Füllstoffe, insbesondere vom Größtkorn, ab. Der Füllstoffanteil der erfindungsgemäßen Zusammensetzung enthält für eine eher rustikale Beschichtung vorteilhafterweise 15 bis 30 Gew.-% Grobsande, 20 bis 40 Gew.-% Feinsande und 25 bis 50 Gew.-% Feinstsande und Mehle, für eine eher feine Beschichtung 0 bis 25 Gew.-% Grobsande, 35 bis 55 Gew.-% Feinsande und 35 bis 50 Gew.-% Feinstsande und Mehle.

Weiterhin kann die erfindungsgemäße Zusammensetzung für wiederablösbare Beschichtungen Farbstoffe oder Pigmente enthalten. In einer bevorzugten Ausführungsform enthält die erfindungsgemäße Beschichtung Weißpigmente. Als Weißpigmente sind Magnesium-, Calcium- oder Titanoxide geeignet. Wenn die erfindungsgemäße Beschichtung als weiße Beschichtung ausgeführt wird, enthält sie 0,5 bis 7 Gew.-%, bevorzugt 1 bis 5 Gew.-% und besonders bevorzugt 1,5 bis 4 Gew,-% Weißpigmente. Natürlich ist es möglich, durch Zugabe anderer Farbstoffe oder Pigmente eine nahezu unbegrenzte Vielzahl an Farbtönen herzustellen.

Weiterhin kann die erfindungsgemäße Zusammensetzung für wiederablösbare Beschichtungen geringe Mengen an Additiven und Hilfsstoffen enthalten. Diese Additive und Hilfsstoffe beinhalten Verdicker, Mittel zur Regulierung der offenen Zeit, Netz- und Dispergiermittel, Entschäumer, Haftverstärker und ähnliche.

Weiterhin enthält die erfindungsgemäße Zusammensetzung für wiederablösbare Beschichtungen zweckmäßigerweise ein oder mehrere Konservierungsmittel zur Gebindekonservierung und gegebenenfalls zur Filmkonservierung. Dem Fachmann wird es nicht schwerfallen, aus der Vielzahl der am Markt erhältlichen Konservierungsmittel ein geeignetes Mittel auszuwählen und in der geeigneten Menge einzusetzen. Als Konservierungsmittel geeignet sind beispielsweise Isothiazolinone, Bronopol, quarternäre Ammoniumverbindungen, Formaldehyd oder Formaldehydabspalter.

Zur Herstellung der wiederablösbaren Beschichtung wird der oben beschriebenen Zusammensetzung noch Wasser zugegeben. Das Gewichtsverhältnis von Wasser zu Feststoff beträgt erfindungsgemäß 1 : 2 bis 1 : 9, vorzugsweise 1 : 2,5 bis 1 : 7 und besonders bevorzugt 1 : 3 bis 1 : 5. Im allgemeinen ist es zweckmäßig, zunächst eine Vormischung aus den Bindemitteln und mindestens der Hälfte der gesamten Wassermenge herzustellen und die übrigen Bestandteile der erfindungsgemäßen Zusammensetzung und gegebenenfalls das Restwasser nacheinander zu der Vormischung zu geben und diese dann zu der anwendungsbereiten Fertigmischung zu vermischen.

Die Bindemittel und die übrigen Bestandteile der erfindungsgemäßen Zusammensetzung können aber auch zu einem homogenen Pulver vermischt werden. Das zur Herstellung der wiederablösbaren Beschichtung erforderliche Wasser wird in diesem Fall erst unmittelbar vor der Verarbeitung in dem im vorherigen Absatz beschriebenen Mengenverhältnis zu dem Pulver gegeben. Durch gründliches Vermischen des Wassers und des homogenen Pulvergemischs wird eine anwendungsfertige erfindungsgemäße Beschichtung hergestellt.

Die erfindungsgemäße Zusammensetzung wird wie ein Kunstharzputz verarbeitet. Es sind keine über das Standardwerkzeug zum Auftrag und zur Strukturierung eines Kunstharzputzes eingesetzten Werkzeuge erforderlich. Ebenso verlangt die Verarbeitung der erfindungsgemäßen Zusammensetzung keine weitergehenden Kenntnisse und Erfahrungen. Die Oberfläche kann in beliebiger Form strukturiert werden. Beispielsweise ist es möglich, die erfindungsgemäße Beschichtung wie einen Reibeputz oder in völlig freier Gestaltung wie einen Rollputz oder einen Strukturputz zu verarbeiten.

Ein weiterer vorteilhafter Aspekt der erfindungsgemäßen Zusammensetzung ist, dass wegen des sehr geringen Anteils an Polymerisatharzen keine Hautbildung auftritt und daher die Strukturierung über einen sehr langen Zeitraum, etwa 45 bis 90 Minuten nach Auftrag auf den Untergrund, möglich ist. Diese Eigenschaft erleichtert insbesondere dem weniger geübten Verarbeiter die Anwendung der erfindungsgemäßen Zusammensetzung. Innerhalb der genannten Zeitspanne Ist es auch möglich, die Strukturierung zu ändern.

Die erfindungsgemäß verwendete Zusammensetzung kann, beispielsweise zur Erzielung dekorativer Effekte oder zum Schutz, auch mehrfach, mit weiteren marktüblichen Anstrichen oder Farben beschichtet werden. Zwar führt dies zur Anfeuchtung des Bindemittelsystems, die erfindungsgemäßen Beschichtung wird dabei aber nicht beschädigt oder abgelöst. Das spätere Ablösen der Beschichtung wie im nächsten Absatz beschrieben ist auch dann nach der Beschichtung mit Anstrichen oder Farben problemlos möglich. Gegebenenfalls, insbesondere wenn mehrere Anstrich- oder Farbschichten aufgetragen wurden, kann es zweckmäßig sein, diese Schichten vor der Entfernung zu perforieren, um einen besseren Kontakt des Wassers mit der erfindungsgemäßen Beschichtung zu ermöglichen. Geeignete Werkzeuge für diesen Zweck sind bekannt, beispielsweise Stachelwalzen.

In einer weiteren Verwendungsform der erfindungsgemäß verwendeten Zusammensetzung ist es möglich, jederzeit Änderungen der Strukturierung durchzuführen. Dazu wird die Beschichtung angefeuchtet, aber nicht vollständig durchfeuchtet. Nach einigen Minuten kann die Oberfläche nach den bekannten und bereits genannten Verfahren neu strukturiert werden.

In einer weiteren Vertvendungsform der erfindungsgemäß verwendeten Zusammensetzung können in ähnlicher Weise wie im vorherigen Absatz beschrieben Beschädigungen der Beschichtung ausgebessert werden. Dazu wird, falls erforderlich, auf die beschädigte Stelle eine geringe Menge der erfindungsgemäßen Beschichtung aufgetragen und der angrenzende Bereich angefeuchtet. Dann kann der Bereich um die beschädigte Stelle neu strukturiert werden.

Die Entfernung der erfindungsgemäß verwendeten Zusammensetzung geschieht in der Weise, dass die Beschichtung ganzflächig mit Wasser befeuchtet wird. Das dazu nötige Wasser kann mit allen üblichen Hilfsmitteln aufgebracht werden, beispielsweise mit einer Spritzflasche, mit einem Pinsel oder Quast, mit einem Schwamm, mit einem Spüllappen oder in anderer geeigneter Weise. Nach einer Einwirkzeit von wenigen Minuten ist das Bindemittelsystem so weit erweicht, dass die Beschichtung mit einem Spachtel, einer Kelle, einem Glätter oder ähnlichen geeigneten Werkzeugen mit sehr geringem Kraftaufwand vollständig, staub- und schmutzfrei und ohne Beschädigung des Untergrundes abgelöst werden kann.

In einer weiteren, aber nicht bevorzugten Ausführungsform der Erfindung wird dem Wasser zur Entfernung der Beschichtung ein Hilfsstoff zugegeben. Geeignete Hilfsstoffe sind beispielsweise Mittel zur Herabsetzung der Oberflächenspannung, beipielsweise in Haushaltsreinigem verwendete Tenside, oder handelsübliche Tapetenentferner.

Der Untergrund ist nach der vollständigen Entfernung der erfindungsgemäßen Beschichtung und nach einer ausreichenden Trocknungszeit wieder erneut beschichtbar. Es kann zweckmäßig sein, den Untergrund nach der Trocknung durch Fegen oder Absaugen von eventuell anhaftenden geringfügigen Resten der Beschichtung oder Krümeln zu befreien. Zur erneuten Beschichtung kann die erfindungsgemäße Zusammensetzung verwendet werden, es können aber auch andere Beschichtungssysteme, beispielsweise Kunstharzputze, mineralische Putze, Tapeten oder keramische Beläge, eingesetzt werden.

Es ist auch möglich, die abgelöste Beschichtungsmasse erneut zur Beschichtung von Oberflächen zu verwenden. Dazu wird der abgelösten Beschichtungsmasse eine so große Wassermenge zugegeben, dass die Beschichtung nach kurzem Aufrühren wieder eine verarbeitungsfähige Konsistenz hat. Anschließend wird die Beschichtungsmasse erneut, wie bereits beschrieben, verarbeitet.

Die Erfindung soll nun an einigen Rahmenrezepturen verdeutlicht werden. Alle Prozentangaben in den Beispielen beziehen sich, sofern nicht ausdrücklich anders angegeben, immer auf die fertige Gesamtmischung des jeweiligen Beispiels.

### Beispiel 1

### Herstellung einer Bindemittelvormischung unter Verwendung eines Dispersionspulvers

Auf 92 bis 96 Gew.-% Wasser werden 2 bis 4 Gew.-% einer Methylhydroxiethylcellulose mit einer Viskosität von 2.500 bis 4.500 mPas nach Brookfield RVT, bei 20 °C und 2 bis 4 Gew.-% eines Redispersionspulvers auf der Basis eines Vinylacetathomopolymers zugegeben. Diese Mischung wird 15 Minuten gründlich gemischt

### Beispiel 2

### Herstellung einer Bindemittelvormischung unter Verwendung einer Dispersion

Auf 88 bis 94 Gew.-% Wasser werden 2 bis 4 Gew.-% einer Methylhydroxiethylcellulose mit einer Viskosität von 2.500 bis 4.500 mPas nach Brookfield RVT bei 20 °C und 4 bis 8 Gew.-% einer Dispersion, enthaltend ein Vinylacetathomopolymer, mit einem Feststoffgehalt von 50 Gew.-% in der Dispersion, zugegeben. Diese Mischung wird 15 Minuten gründlich gemischt.

### Beispiel 3

### Herstellung eines wiederentfernbaren Reibeputzes.

Auf 18 bis 23 Gew.-% der in den Beispielen 1 und 2 dargelegten Bindemittelvormischung werden 20 bis 25 Gew.-% carbonatische Grobsande der Körnung 1 bis 2 mm, 20 bis 22 Gew.-% Quarzfeinsand der Körnung 0,5 bis 1 mm, 25 bis 28 Gew.-% carbonatische Feinstsande und Mehle der Körnung 0,05 bis 0,2 mm, 1 bis 2 Gew.-% Weißpigment sowie 0,2 bis 0,3 Gew.-% Konservierungsmittels gegeben und in einem langsam laufenden Mischer 15 Minuten gründlich gemischt. So wird eine Beschichtung hergestellt, die als feiner Reibeputz verarbeitet werden kann.

### Beispiel 4

### Herstellung eines wiederentfernbaren Strukturputzes

Auf 18 bis 23 Gew.-% der in den Beispielen. 1 und 2 beschriebenen Bindemittelvormischung werden 20 bis 22 Gew.-% carbonatische Grobsande der Körnung 1 bis 1,5 mm, 20 bis 22 Gew.-% Quarzfeinsand der Körnung 0,5 bis 1 mm, 32 bis 35 Gew.-% carbonatische Feinstsande und Mehle der Körnung 0,05 bis 0,2 mm, 1 bis 2 Gew.-% Weißpigment sowie 0,2 bis 0,3 Gew.-% Konservierungsmittel gegeben und in einem langsam laufenden Mischer 15 Minuten gründlich gemischt. So wird eine feinkörnige Beschichtung hergestellt, die sehr individuell frei gestaltet und strukturiert werden kann.

### Beispiel 5

### Umstrukturierung einer beschichteten Fläche

Eine Wand wird mit der erfindungsgemäßen Beschichtung aus Beispiel 3 oder 4 beschichtet und als Reibeputz in Längsmustem strukturiert. Nach Abschluss der Strukturierung stellt der Anwender fest, dass er lieber ein anderes Muster möchte. Ohne weitere Vorbehandlung strukturiert er auf die gewünschte alternative Struktur um. Dies ist innerhalb einer sehr langen Zeitspanne von ca. 45 bis 90 Minuten möglich. Aber auch danach ist es immer noch möglich, wenn die Beschichtung vorher etwas befeuchtet wird.

### Beispiel 6

### Ablösen der erfindungsgemäßen Beschichtung

Auf eine mit einer Beschichtung nach Beispiel 3 oder 4 beschichtete Wand wird mit einer Sprühflasche solange Wasser gleichmäßig aufgetragen, bis die gesamte Beschichtungsfläche feucht erscheint. Nach einer Einwirkzeit von 10 Minuten wird noch einmal kurz etwas Wasser auf die Fläche aufgesprüht. Danach wird mit einem Spachtel die Beschichtung vom Untergrund abgelöst. Die Beschichtung ist so weich geworden, dass sie mühelos in Streifen von der Wand geschält werden kann. Der Untergrund wird nach 2 Tagen Trocknung mit einer Bürste abgefegt und anschließend nach Belieben neu beschichtet.

### Meßmethoden:

Die Körnung wurde bestimmt nach DIN 53193.

Die Dichte (= Reindichte) wurde bestimmt nach DIN 4226, T.3.

Die Viskosität wurde bestimmt nach DIN 53018 bei einer Konzentration von 2 %, bei einer Temperatur von 20°C sowie unter folgenden Meßbedingungen: Brookfield RVT, Spindel 54, 20 Upm.

## Patentansprüche

1. Zusammensetzung für eine wiederablösbare dekorative Beschichtung, enthaltend
A) 0.5 bis 3,0 Gew.-% eines Bindemittel-Systems aus
a) 30 bis 90 Gew.-% der Bindemittelkomponente A und
b) 10 bis 70 Gew.-% der Bindemittelkomponente B,
B) 80 bis 99 Gew.-% mindestens eines Füllstoffes.
C) 0,5 bis 7 Gew.-% mindestens eines Farbstoffes bzw. Pigments sowie
D) Hilfsstoffen, wie z.B. Konservierungsmittel, Verdicker, Entschäumer, Netz- und Dispergiermittel, Haftverstärker und Mittel zur Regulierung der offenen Zeit,
wobei sich die Gew.-% von A), B), C) und D) auf die Zusammensetzung als solches beziehen und sich auf 100 % ergänzen und die wiederablösbare dekorative Beschichtung ein Putz, Kunstharzputz oder eine Spachtelmasse ist.

2. Zusammensetzung nach Anspruch 1, **dadurch gekennzeichnet, daß** sie neben den Feststoffen A) bis D) noch 10 bis 33 Gew.-% an Wasser enthält.

3. Zusammensetzung nach Anspruch 1, **dadurch gekennzeichnet, daß** die Bindemittelkomponente A) aus mindestens einem naturbasierten Bindemittel, insbesondere einem Cellulose-, Stärke-Derivat oder Stärke besteht.

4. Zusammensetzung nach Anspruch 1, **dadurch gekennzeichnet, daß** die Bindemittelkomponente B) aus mindestens einem vollsynthetischen Bindemittel besteht, insbesondere Polymerisaten.

5. Zusammensetzung nach Anspruch 4, **gekennzeichnet durch** die Polymerisate in Form von Redispersionspulvern, Dispersionen oder Lösungen mit oder ohne Weichmacheranteile.

6. Zusammensetzung nach Anspruch 1, **dadurch gekennzeichnet, daß** die Dichte der verwendeten Füllstoffe 1,2 bis 5 g/cm³ beträgt, gemessen nach DIN 4226, T.3.

7. Zusammensetzung nach Anspruch 1, **dadurch gekennzeichnet, daß** die Pigmente Weißpigmente sind, nämlich Magnesium-, Calcium- oder Titanoxid.

8. Herstellung der Zusammensetzung nach den Ansprüchen 1 bis 7 durch Mischen der pulverförmigen Komponenten A bis D.

9. Verwendung der Zusammensetzung nach einem der Ansprüche 1 bis 7 zur Herstellung eines Putzes, insbesondere eines Reibeputzes, eines Rollputzes oder eines Strukturputzes.

10. Verwendung der Zusammensetzung nach Anspruch 9, **dadurch gekennzeichnet, daß** man die trockene Zusammensetzung nach den Ansprüchen 1 sowie 3 bis 7 unmittelbar vor dem Auftragen des Putzes mit Wasser anrührt.

11. Verwendung nach Anspruch 9, **dadurch gekennzeichnet, daß** man den Putz auf einen Untergrund aufträgt und später zu einem beliebigen Zeitpunkt wieder rückstandsfrei entfernt, insbesondere durch Abschieben nach vorheriger Befeuchtung mit Wasser, dem oberflächenaktive Stoffe zugesetzt sein können.

## Claims

1. Composition for a redetachable decorative coating, comprising
A) 0.5% to 3.0% by weight of a binder system composed of
a) 30% to 90% by weight of binder component A and
b) 10% to 70% by weight of binder component B,
B) 80% to 99% by weight of at least one filler,
C) 0.5% to 7% by weight of at least one dye or pigment, and
D) auxiliaries, such as preservatives, thickeners, defoamers, wetting agents, dispersants, adhesion promoters and agents for regulating the open time,
the weight percentages of A), B), C) and D) being based on the composition per se and adding up to 100%, and the redetachable decorative coating being a plaster, synthetic-resin plaster, or a filling compound.

2. Composition according to Claim 1, **characterized in that** besides solids A) to D) it further comprises 10% to 33% by weight of water.

3. Composition according to Claim 1, **characterized in that** binder component A) is composed of at least one natural-based binder, in particular a cellulose derivative, starch derivative or starch.

4. Composition according to Claim 1, **characterized in that** binder component B) is composed of at least one fully synthetic binder, especially addition polymers.

5. Composition according to Claim 4, **characterized by** the addition polymers in the form of redispersible powders, dispersions or solutions with or without plasticizer fractions.

6. Composition according to Claim 1, **characterized in that** the density of the fillers used is 1.2 to 5 g/cm³, measured in accordance with DIN 4226, T.3.

7. Composition according to Claim 1, **characterized in that** the pigments are white pigments, namely magnesium oxide, calcium oxide or titanium oxide.

8. Preparing the composition according to Claims 1 to 7 by mixing pulverulent components A to D.

9. Use of the composition according to Claims 1 to 7 for producing a plaster, in particular a float plaster, a rolling plaster or a texturing plaster.

10. Use of the composition according to Claim 9,
**characterized in that** the dry composition according to Claims 1 and also 3 to 7 is prepared by stirring with water immediately prior to application of the plaster.

11. Use according to Claim 9, **characterized in that** the plaster is applied to a substrate and later, at any desired point in time, is removed again without residue, in particular by scraping after prior moistening with water to which surface-active substances may have been added.

## Revendications

1. Composition pour un revêtement décoratif détachable, contenant
A) à concurrence de 0,5 à 3,0 % en poids, un système de liant constitué par
a) à concurrence de 30 à 90 % en poids, le composant de liant A et
b) à concurrence de 10 à 70 % en poids, le composant de liant B ;
B) à concurrence de 80 à 99 % en poids, au moins une matière de charge ;
C) à concurrence de 0,5 à 7 % en poids, au moins un colorant respectivement un pigment, ainsi que
D) des adjuvants, comme par exemple des conservateurs, des épaississants, des agents antimousse, des agents mouillants et des agents de mise en dispersion, des renforçateurs de l'adhérence et des moyens pour régler le temps d'utilisation ;
dans laquelle les % en poids de A), B), C) et D) se rapportent à la composition comme telle et se complètent pour obtenir 100 %, et le revêtement décoratif détachable représente un enduit, un enduit de résines synthétiques ou un bouche-pores.

2. Composition selon la revendication 1, **caractérisée en ce qu'**elle contient, outre les substances solides A) à D), de l'eau à concurrence de 10 à 33 % en poids.

3. Composition selon la revendication 1, **caractérisée en ce que** le composant de liant A) est constitué d'au moins un liant à base naturelle, en particulier d'un dérivé de cellulose, d'un dérivé d'amidon ou d'amidon.

4. Composition selon la revendication 1, **caractérisée en ce que** le composant de liant B) est constitué d'au moins un liant entièrement synthétique, en particulier de polymères.

5. Composition selon la revendication 4, **caractérisée en ce que** le polymère se présente sous la forme de poudres de remise en dispersion, de dispersions ou de solutions avec ou sans parts de plastifiants.

6. Composition selon la revendication 1, **caractérisée en ce que** la densité des matières de charge utilisée s'élève de 1,2 à 5 g/cm³, mesurée conformément à la norme DIN 4226, T.3.

7. Composition selon la revendication 1, **caractérisée en ce que** les pigments sont des pigments blancs, plus précisément, de l'oxyde de magnésium, de l'oxyde de calcium ou de l'oxyde de titane.

8. Préparation de la composition selon les revendications 1 à 7, par mélange des composants pulvérulents A à D.

9. Utilisation de la composition selon l'une quelconque des revendications 1 à 7, pour la préparation d'un enduit, en particulier d'un enduit à appliquer à la taloche, d'un enduit à appliquer au rouleau ou d'un enduit de parement.

10. Utilisation de la composition selon la revendication 9, **caractérisée en ce qu'**on délaie avec de l'eau la composition sèche selon les revendications 1 et 3 à 7, directement avant l'application de l'enduit.

11. Utilisation selon la revendication 9, **caractérisée en ce qu'**on applique l'enduit sur un substrat et on le retire par la suite à n'importe quel moment en l'absence de résidu, en particulier par enlèvement après humidification préalable avec de l'eau à laquelle on peut ajouter des substances tensioactives.
